(19) **Europäisches Patentamt**

**European Patent Office**

**Office européen des brevets**

(11) **EP 1 560 481 B1**

(12) **FASCICULE DE BREVET EUROPEEN**

| | |
|---|---|
| (45) Date de publication et mention de la délivrance du brevet:<br>**08.11.2006 Bulletin 2006/45** | (51) Int Cl.:<br>***A01G 1/00*** (2006.01) |
| (21) Numéro de dépôt: **03795808.9** | (86) Numéro de dépôt international:<br>**PCT/EP2003/012408** |
| (22) Date de dépôt: **04.11.2003** | (87) Numéro de publication internationale:<br>**WO 2004/040961 (21.05.2004 Gazette 2004/21)** |

(54) **APPAREIL ET METHODE DE MONTAGE D'UN DISPOSITIF POUR LA PRESENTATION ET LA CONSERVATION DE BOUQUETS DE FLEURS**

ANLAGE UND VERFAHREN ZUR HERSTELLUNG EINER BLUMENSTRAUSSPRÄSENTIER- UND KONSERVIEREINRICHTUNG

APPARATUS AND METHOD FOR MOUNTING A DEVICE FOR DISPLAYING AND PRESERVING FLOWER ARRANGEMENTS

| | |
|---|---|
| (84) Etats contractants désignés:<br>**AT BE BG CH CY CZ DE DK EE ES FI FR GB GR HU IE IT LI LU MC NL PT RO SE SI SK TR** | (72) Inventeur: **Charrin, Philippe**<br>**26600 Beaumont Monteux (FR)** |
| (30) Priorité: **05.11.2002 LU 90983** | (74) Mandataire: **Weydert, Robert et al**<br>**Dennemeyer & Associates S.A.**<br>**P.O. Box 1502**<br>**1015 Luxembourg (LU)** |
| (43) Date de publication de la demande:<br>**10.08.2005 Bulletin 2005/32** | (56) Documents cités:<br>**EP-A- 0 881 167      EP-B- 0 828 446**<br>**US-A- 2 634 532      US-A- 5 255 421** |
| (73) Titulaire: **Charrin, Philippe**<br>**26600 Beaumont Monteux (FR)** | |

**Description**

La présente invention concerne un appareil et une méthode de montage d'un dispositif pour la présentation et la conservation de bouquets de fleurs ainsi que d'un dispositif pour l'emballage et la conservation de bouquets de fleurs.

Le brevet EP 0828 446 décrit un dispositif pour la présentation de bouquets comportant un support repliable, une pluralité de lamelles, un lien enroulé autour des lamelles, une feuille étanche, une première fixation du dispositif et une deuxième fixation formée par un ruban.

Le brevet EP 0881 167 divulgue un récipient pour bouquets de fleurs comprenant un élément de base circulaire à partir duquel s'étendent une pluralité d'éléments allongés.

Le but de l'invention est la fabrication d'un dispositif pour la présentation rapide d'un bouquet de fleurs en position verticale et la conservation de ce bouquet en introduisant de l'eau par un orifice situé à la partie supérieure du dispositif.

L'invention a aussi pour but de créer un appareil pour former un dispositif stable pour présenter toutes sortes de bouquets.

La présente invention concerne le montage rapide d'un dispositif livré à plat s'adaptant à tout bouquet de fleurs coupées comme support en stockage ou à la vente, par ses différentes formes avec ou à la vente, par ses différentes formes avec ou sans fond, ronds, carrés, triangulaires, ou autres.

Ce dispositif et son bouquet pliés, dans toutes feuilles étanches, communément employées en milieu horticole ou fleuriste, permet une fois en forme de contenir une réserve d'eau dont le poids à sa base assure une stabilité parfaite avec une quantité d'eau prédéterminée pour le transport.

Le principe de l'appareil selon l'invention permet de fabriquer un dispositif pour le transport, du lieu de vente au destinataire, d'un bouquet plié,avec la réserve d'eau contenue dans son emballage, en lui assurant sa conservation jusqu'au client final, et tout le long du trajet sans flétrissement.

Selon l'invention, comme définie dans la revendication 1, l'appareil est destiné au montage d'un dispositif pour la présentation de bouquets individuels de fleurs, ce dispositif comprenant un élément de base muni ou non d'un rebord surélevé le long de toute sa circonférence, et une feuille étanche ou non placée sous l'élément de base, convergeant vers le sommet central du dispositif et retenue par une fixation formée par un ruban pour maintenir la feuille étanche autour de bouquet. L'appareil comprend une pluralité de doigts de drapage mobiles associés à un câble de serrage pour guider la feuille autour de l'élément de base. Une semelle d'appui est mobile suivant un axe vertical pour supporter le dispositif et un moyen de guidage de forme prédéterminée est relié à la semelle d'appui pour guider la pluralité de doigts de drapage. Un moyen de mise en action est prévu pour déplacer la semelle d'appui et le moyen de guidage suivant l'axe vertical et pour actionner simultanément la pluralité de doigts de drapage guidés par le moyen de guidage de manière de resserrer le câble de serrage autour de la feuille drapée.

La méthode de fabrication, selon la revendication 7, d'un dispositif pour la présentation de bouquets individuels de fleurs de l'invention comprend les étapes qui consistent à :

positionner la feuille et l'élément de base sur une semelle d'appui pour supporter le dispositif;
mouvoir la semelle d'appui vers le bas suivant un axe vertical et un moyen de guidage de forme prédéterminée relié à la semelle d'appui pour amorcer la pliée de la feuille;
guider une pluralité de doigts de drapage mobiles pivotants associés à un câble de serrage pour draper la feuille autour de l'élément de base de manière de resserrer le câble de serrage autour de la feuille drapée; et
retenir le feuille autour du bouquet par une fixation formée par exemple par un ruban.

La présente invention sera mieux comprise en se référant aux figures suivantes:

La Fig. 1 représente la dispositif réalisé avec son bouquet par un appareil selon l'invention.

La Fig. 2 représente l'appareil de montage selon un mode de réalisation préféré de l'invention.

La Fig. 3 représente le mode de réalisation de la Fig. 2 où le pliage de la feuille est amorcé.

La Fig. 4 représente le mode de réalisation de la Fig. 1 où le drapage de la feuille est terminé.

La Fig. 5 représente une vue du dessus partielle du mode de réalisation de la Fig. 2.

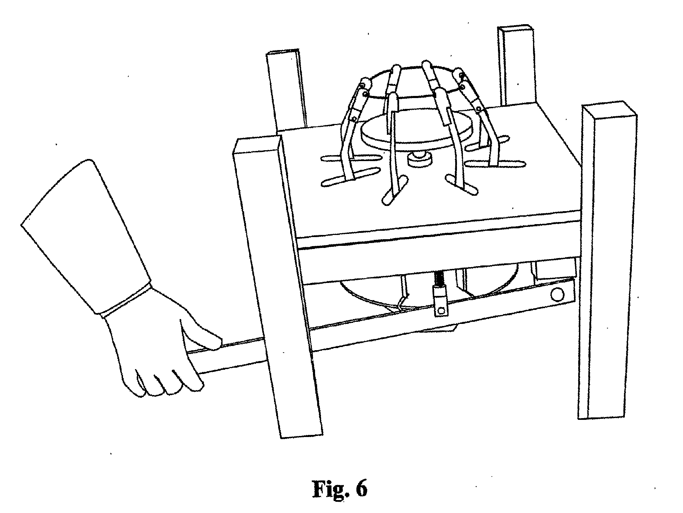

La Fig. 6 est une représentation de l'invention de la Fig. 2 dans la position de la Fig. 3.

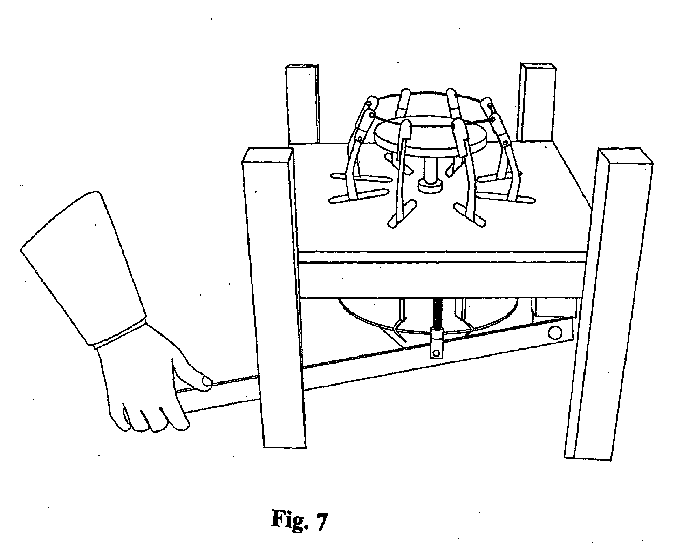

La Fig. 7 est une représentation de l'invention dans une position intermédiaire.

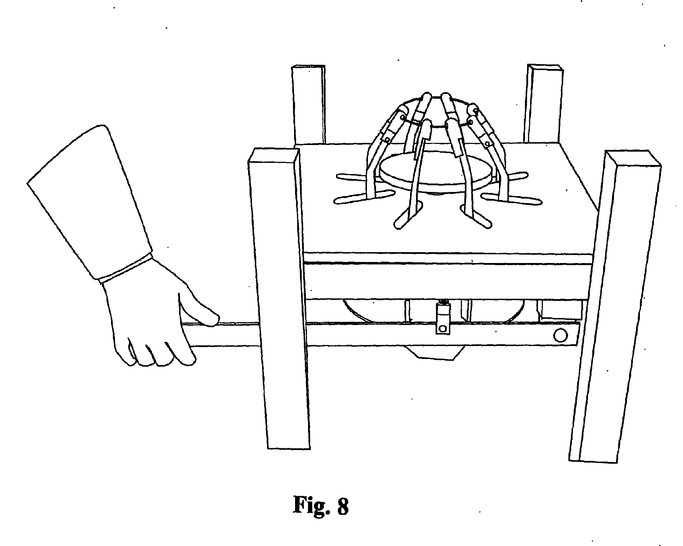

La Fig. 8 est une représentation de l'invention dans la position de la Fig. 4.

La Fig. 9 est une vue d'ensemble du mode de réalisation de la Fig. 2.

Les Figs. 10 à 15 montrent les étapes successives de la méthode de montage de l'invention.

La Fig. 16 est une représentation du système de remplissage du dispositif suivant l'invention.

Les Figs. 17 à 19 montrent le dispositif de drapage de l'invention utilisé mécaniquenent sur un carrousel automatisé.

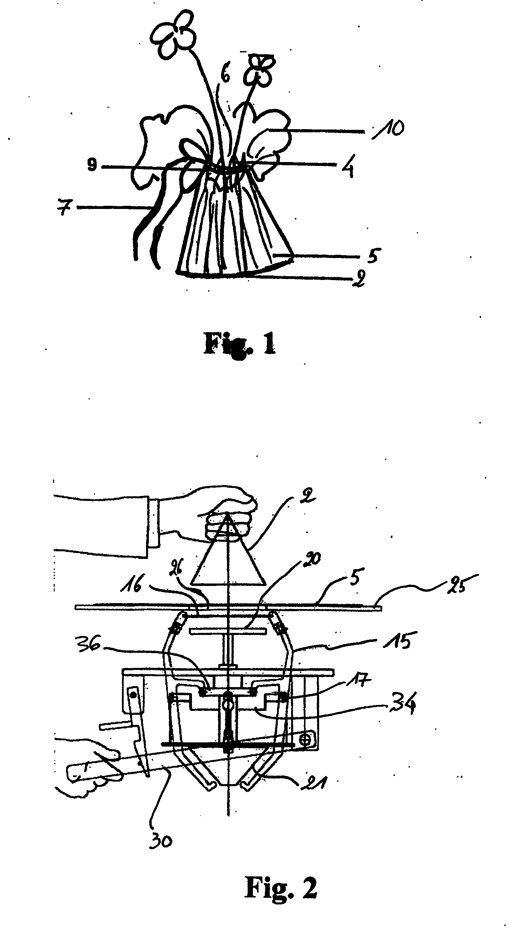

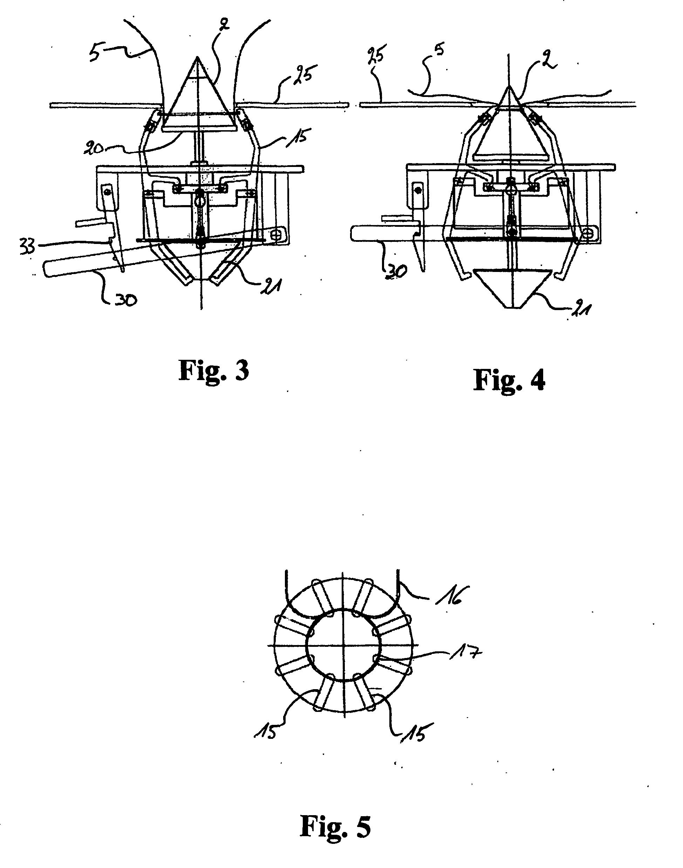

Le dispositif (10) de la Fig. 1 pour la présentation et la conservation de bouquets individuels de fleurs permettant le maintien de la/des fleurs au niveau de l'axe central du dispositif comprend un élément de base (2) de forme quelconque, de dimensions réglables ou non pour s'adapter à la taille des bouquets, muni ou non d'un rebord surélevé (4) le long de toute sa circonférence servant au maintien du bouquet en position verticale, ce bouquet pouvant être lié par une première fixation formée par un lien. Le dispositif comprend en outre une feuille étanche (5) ou non entourant l'élément de base (2), et convergeant vers le sommet central du dispositif (10) et retenue par fixation (9) formée par un ruban (7) pour maintenir la feuille (5) autour du bouquet, l'ensemble étant agencé pour permettre l'introduction d'eau par un orifice (6) situé à la partie supérieure du dispositif. L'élément de base (2) du support peut être de forme circulaire, carrée, rectangulaire, triangulaire, polygonale, trapézoïdale, en croix, en trépied et en trépied ayant chaque base des pieds reliée par un élément en arc de cercle aux bases adjacentes. L'élément de base (2) peut posséder une ou plusieurs ondulations et une ou plusieurs creux pour maintenir en place l'extrémité des tiges des fleurs.
L'élément de base (2) peut être formé d'un récipient conique (2) avec un orifice (6) situé à la partie supérieure.
L'invention selon le principe de pliage du bouquet classique, constitué de l'élément de base (2) et d'une feuille étanche ou non (5) relevée facilite la mise en forme de la feuille. Selon l'invention, le dispositif pour la présentation de bouquets peut aussi être monté sans un tel élément de base (2) avec une simple feuille étanche (5).
Comme on peut le voir aux Figs 2 à 4, l'appareil de montage du dispositif pour la présentation de bouquets individuels de fleurs comprend une pluralité de doigts (15) de drapage mobiles pivotants associés à un câble de serrage (16) pour guider la feuille (5) autour de l'élément de base (2). Le nombre de doigts (15) de drapage peut varier pour former un dispositif (10) de forme prédéfinie (cône, pyramide, etc.). Le câble (16) de serrage peut être en métal, en plastique, ou toute autre matière flexible.
Une semelle d'appui (20) mobile suivant un axe vertical supporte le dispositif (10). Un moyen de guidage (21) de forme prédéterminée, par exemple conique, est relié à la semelle d'appui (20) pour guider la pluralité de doigts (15) de drapage et donner une forme prédéfinie au dispositif (10).
Un moyen de mise en action (30), par exemple un levier manuel (30), est utilisé pour déplacer la semelle d'appui (20) et le moyen de guidage (21) suivant l'axe vertical, et ainsi faire pivoter la pluralité de doigts (15) de drapage en étant guidés par le moyen de guidage (21) de manière de resserrer le câble de serrage (16) autour de la feuille (5).
En outre, une table (25) munie d'un orifice (26) permet le passage de la feuille (5) et de l'élément de base (2) de manière à amorcer la pliée par l'orifice (26) de la table (25).
Le levier (30) est monté à pivotement et est connecté à un élément axial (34) de liaison mobile suivant l'axe vertical pour faire pivoter les doigts de drapage (15) via les pivots (17), ces mêmes doigts (15) étant aussi reliés à un élément de support fixe (36).
L'élément axial (34) mobile monte et descend par action du levier (30) et les doigts (15) pivotent alors autour de l'élément de support fixe (36). Par action du levier (30), suivant les Figs 3 et 4, la semelle d'appui (20) descend pour continuer le drapage (21) et le moyen de guidage conique (21) descend pour guider le pivotement des doigts (15) de drapage et resserrer le câble (16) autour de la feuille (5).
Comme on peut le voir en Fig. 5, les extrémités du câble (16) sont libres et le câble (16) glisse dans des ouvertures (17) formées dans chacun des doigts (15) pour permettre le serrage du dispositif (10).
Dans le mode de réalisation préféré, des trous (17) sont formés horizontalement dans les extrémités des doigts (15) et sont d'un diamètre légèrement plus grand que celui du câble (16) pour permettre un glissement libre. Les extrémités des doigts (15) sont disposées de manière à ce que le câble (16) forme un cercle. Le rayon de ce cercle diminue par pivotement des doigts (15) du à l'actionnement du levier (30), laissant glisser le câble (16) dans les ouvertures (17) des doigts (15).
Le levier (30) comporte un système d'arrêt (33) pour maintenir le levier (30) en position horizontale à la fin du drapage et permettre la fixation (9) de la feuille (5) autour du bouquet. Une fois l'attachage terminé, l'appareil libère le dispositif (10) qui remonte par action du levier (30).
Le moyen de guidage (21) peut être de forme généralement conique de sorte que les doigts de drapage (15) sont guidés par le moyen de guidage (21) pendant le déplacement simultané de la semelle d'appui (20) et du moyen de guidage (21) et permettent la formation d'un dispositif (10) généralement conique conjugué.

Des bases (2) suivant le même principe peuvent être conçues, de forme carrés, triangulaire, rectangulaire, etc, pour l'obtention d'un dispositif pyramidal.

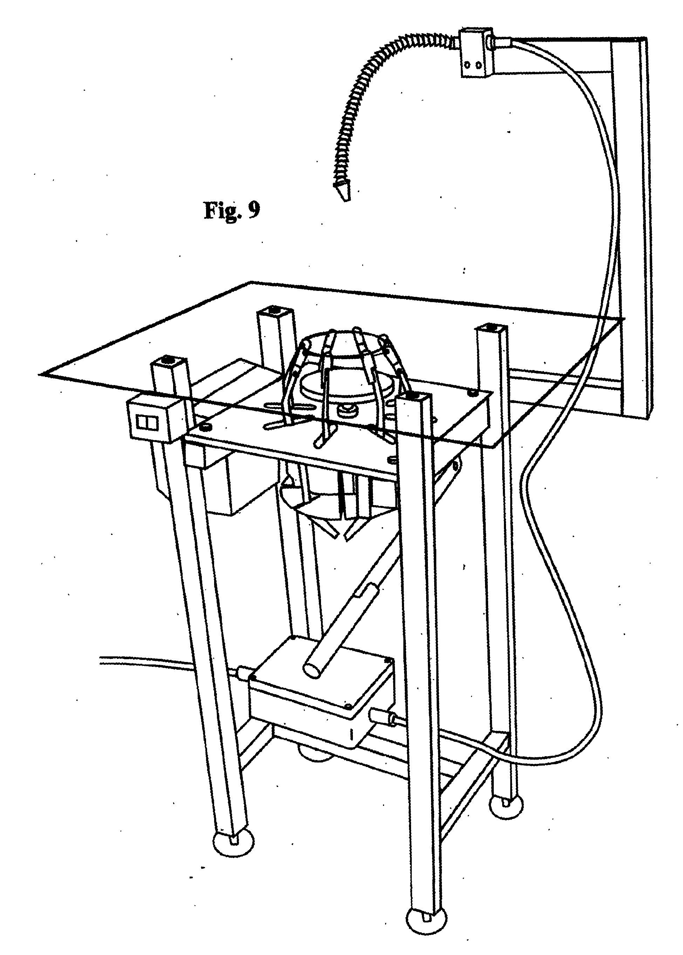

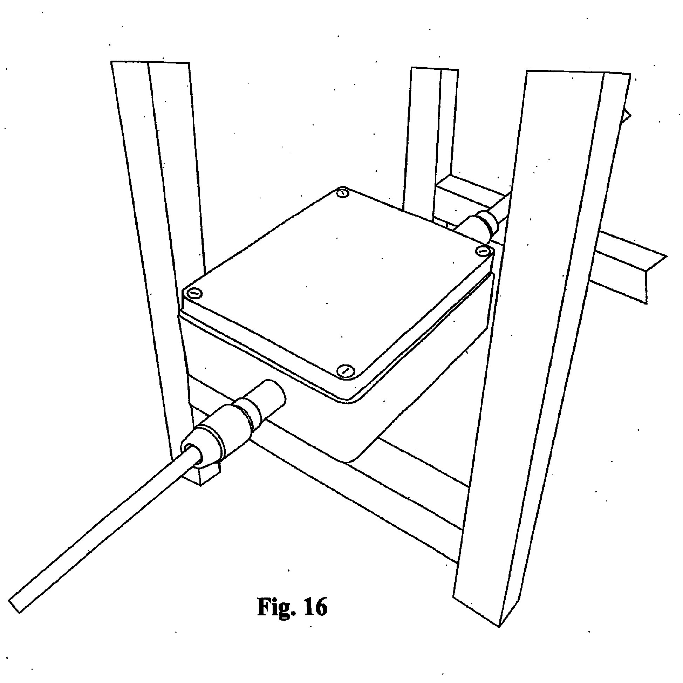

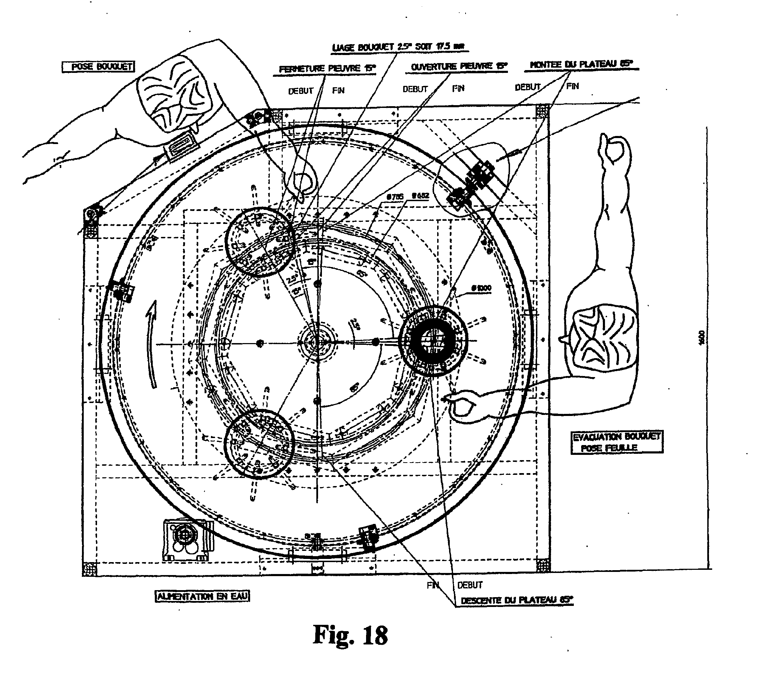

L'appareil de l'invention peut aussi comprendre une source d'eau en combinaison d'un régulateur de pression et d'une électrovanne piloté par une tempo pour remplir le dispositif d'un volume d'eau prédéfini (voir Fig. 9 et 16).

Lors du remplissage de l'eau par la combinaison d'un régulateur de pression et d'une électrovanne piloté par temporisation, l'opérateur défini à sa guise un volume d'eau défini par:

$$\frac{\text{Pression}}{\text{Temps d'ouverture}} = \text{volume d'eau constant}$$

Le système de remplissage peut être combiné à un mélangeur de produit conservateur pour bouquets de fleurs.

L'attachage (9) de la feuille drapée (5) peut se faire en temps masqué pendant le remplissage de l'eau soit manuellement, soit par tout système automatique connue sur le marché ou développé sur mesure.

Une fois le remplissage terminé et l'attachage réalisé, l'appareil libère le bouquet et sa réserve d'eau de manière manuelle (lever du levier) ou mécanique par bouton. L'ensemble des opérations peut être pilotées par un automate; dans cette version le bouquet avec ou sans support (2) sera amené au poste de manière automatique.

L'appareil de l'invention a deux fonctions

- drapage d'une feuille (5) étanche ou non autour d'un bouquet seul équipé ou non d'un support (2), principe complet communément appelé bouquet à réserve d'eau
- Réglage et remplissage d'eau d'un volume défini.

Suivant la méthode de l'invention, le drapage est combiné par la pluralité de doigts (15) suivant la descente, et le câble enserrant la feuille (5) au système l'empêchant de coincer la feuille, ces deux combinaisons assurant un "drapé" parfait.

La méthode comprend les étapes qui consistent à :

positionner la feuille (5) et l'élément de base (2) sur la semelle d'appui (20) pour supporter le dispositif,

amorcer la pliée de la feuille (5) par le passage de la feuille (5) et de l'élément de base (2) à travers un orifice (26) d'une table de support (25),

mouvoir la semelle d'appui (20) vers le bas suivant un axe vertical et le moyen de guidage (21) relié à la semelle d'appui (20) pour continuer la pliée de la feuille (5),

guider la pluralité de doigts (15) de drapage mobiles pivotants associés au câble de serrage (16) pour draper la feuille (5) autour de l'élément de base (2) de manière de reserrer le câble de serrage (16) autour de la feuille (5) drappée, et

retenir la feuille (5) autour du bouquet par la fixation (9) formée par un ruban (7).

Par l'action du levier (30), la descente de la semelle d'appui (20) et du moyen de guidage (21) est simultanée au pivotement des doigts de drapage (15) qui sont guidés par le guidage (21) pour assurer une forme parfaite au dispositif (10).

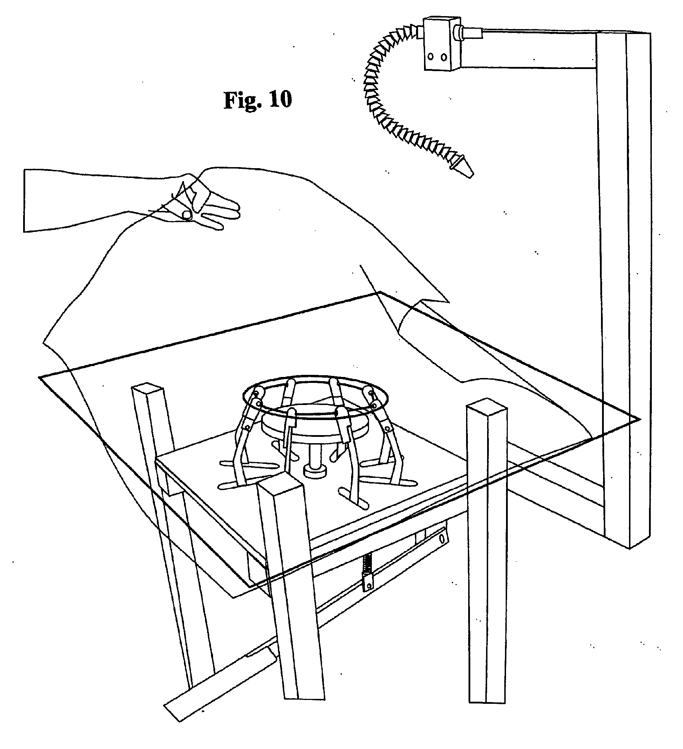

Les étapes successives de la méthode de montage de l'invention sont illustrées aux Figs. 10 à 15.

La Fig. 10 illustre le positionnement d'une feuille (5) de papier sur la table (25) de l'appareil.

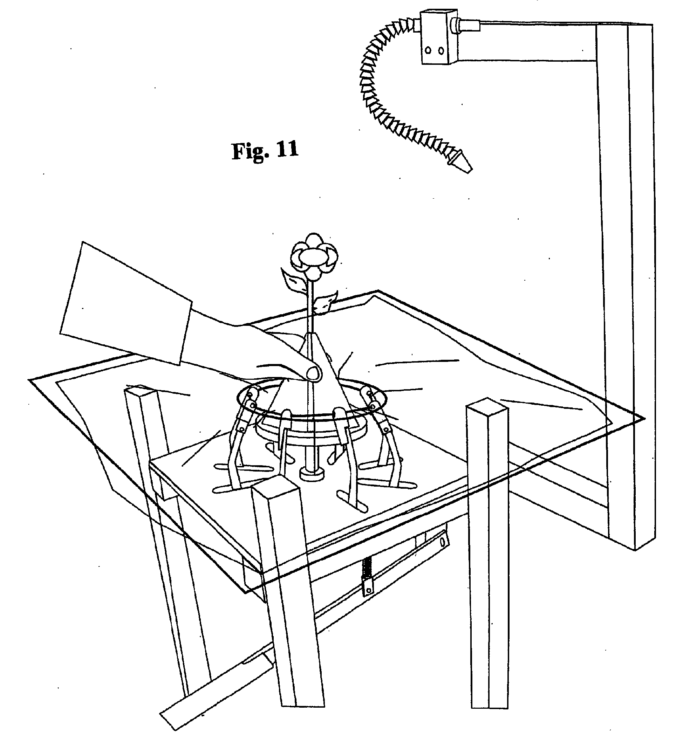

La Fig. 11 illustre l'amorçage de la pliée par l'orifice (26) de la table en positionnant le bouquet avec ou sans support (2) et en enfonçant le tout à travers l'orifice (26).

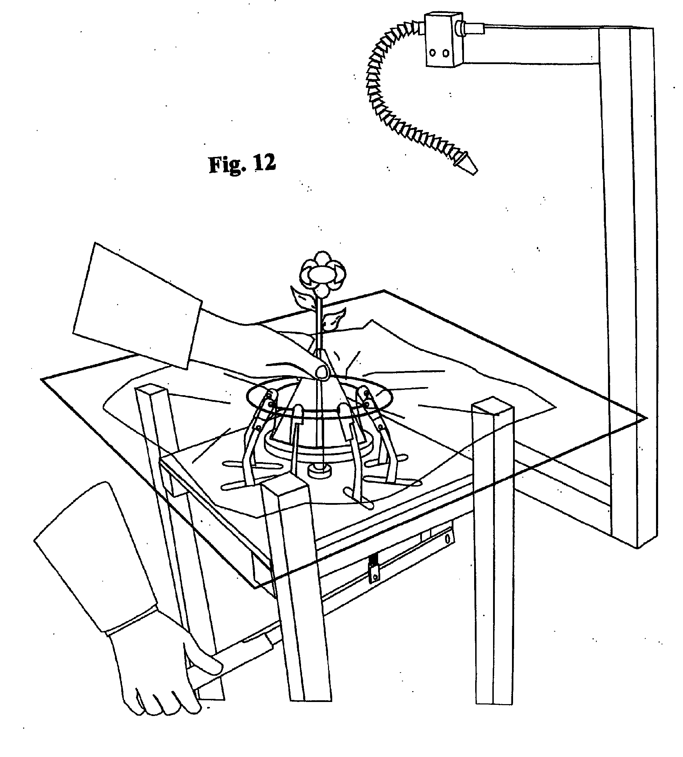

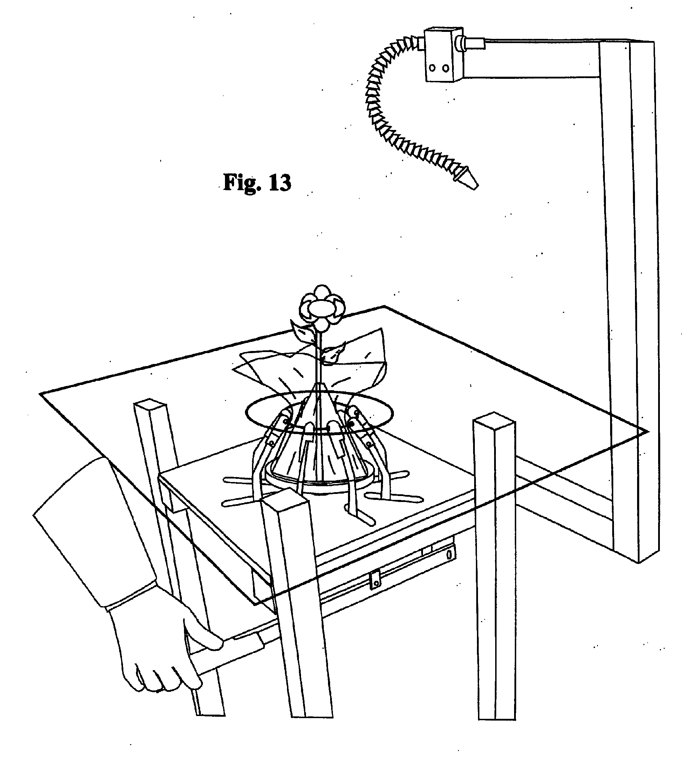

Les Figs. 12 et 13 illustrent l'actionnement du levier (30) et le drapage de l'élément de base (2) par la feuille (5). Enfoncement et montée du levier (Mécanique ou manuel) simultané.

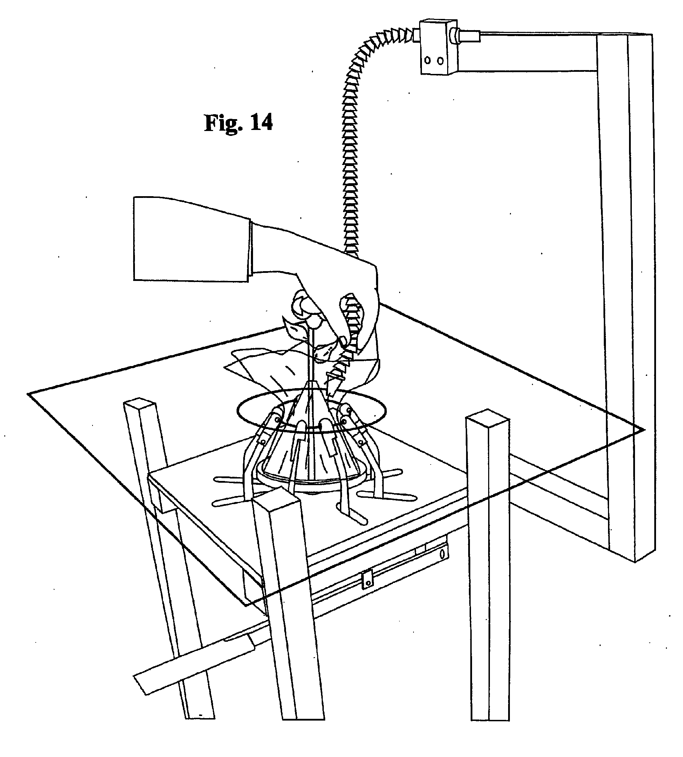

La Fig. 14 illustre le remplissage d'eau par l'orifice (6) supérieur du dispositif en temps masqué par l'attachage de la feuille (5) drapée et le blocage du système une fois le drapage terminé.

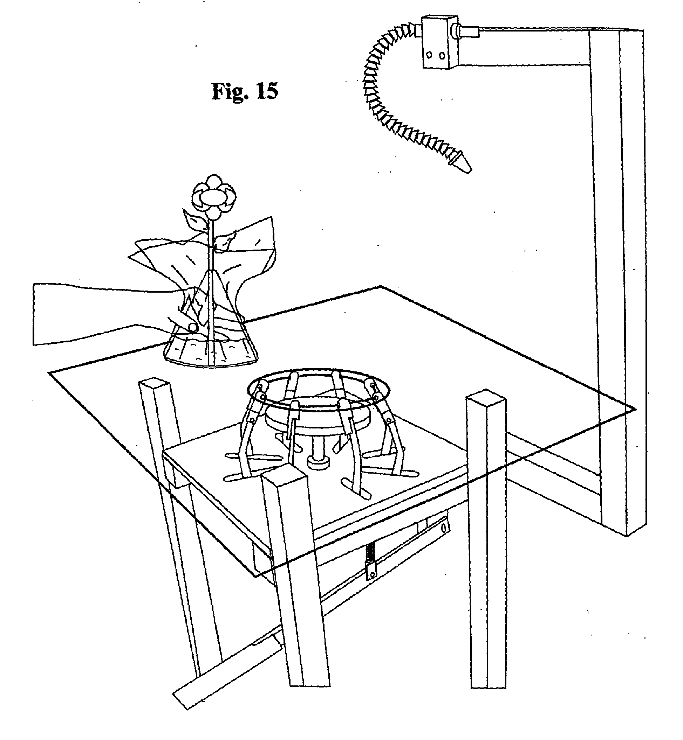

La Fig. 15 illustre le retrait du dispositif une fois le remplissage terminé et l'attachage réalisé, la machine libérant le bouquet et sa réserve d'eau de manière manuelle (lever du levier) ou mécanique par bouton.

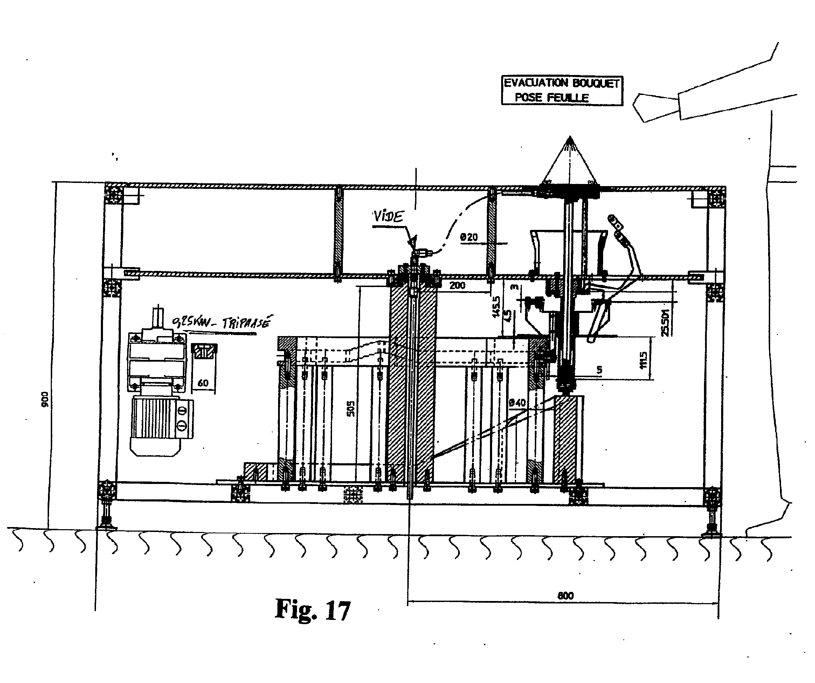

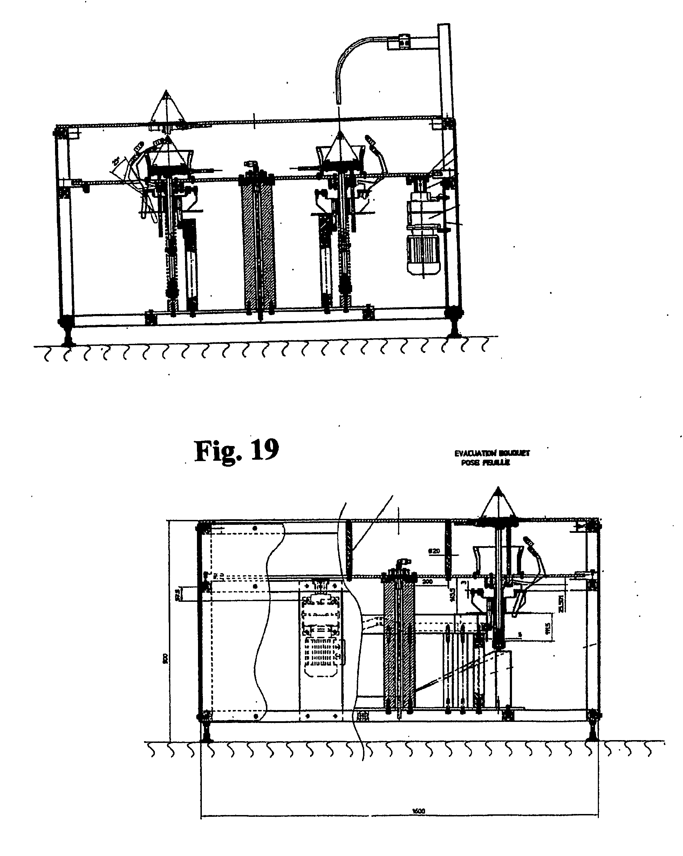

Les Figs. 17 à 19 montrent le dispositif de drapage de l'invention utilisé mécaniquenent sur un carrousel automatisé. En particulier, comme le montrent les Figs. 17 à 19, une série d'appareils de drapage de l'invention (par exemple une série de trois appareils) peut etre disposée sur un carrousel tournant de manière à automatiser le processus de fabrication du dispositif pour la présentation de bouquets individuels de fleurs. Il va de soi que le dispositif de drapage de l'invention peut donc etre utilisé soit manuellement ,soit mécaniquenemt sur un carrousel de ce type.

**Revendications**

1. Appareil de montage d'un dispositif (10) pour la présentation de bouquets individuels de fleurs, ce dispositif comprenant un élément de base (2) muni ou non d'un rebord surélevé (4) le long de toute sa circonférence, et une feuille (5) étanche ou non placée sous l'élément de base (2), convergeant vers le sommet central du dispositif (10) et retenue par une fixation (9) formée par un ruban (7) pour maintenir la feuille étanche (5) autour du bouquet, **caractérisé en ce que** l'appareil comprend:

   une pluralité de doigts (15) de drapage mobiles pivotants associés à un câble de serrage (16) pour guider la feuille (5) autour de l'élément de base (2),
   une semelle d'appui (20) mobile suivant un axe vertical pour supporter le dispositif (10),
   un moyen de guidage (21) de forme prédéterminée relié à la semelle d'appui (20) pour guider la pluralité de doigts (15) de drappage, et
   un moyen de mise an action (30) pour déplacer la semelle d'appui (20) et le moyen de guidage (21) suivant l'axe vertical et pour faire pivoter la pluralité de doigts (15) de drapage en étant guidés par le moyen de guidage (21) de manière de reserrer le câble de serrage (16) autour de la feuille (5) drapée.

2. Appareil de montage suivant la revendication 1, **caractérisé en ce qu'**il comprend une table (25) munie d'un orifice (26) pour le passage de la feuille (5) et de l'élément de base (2) et amorcer la pliée par l'orifice (26) de la table (25).

3. Appareil de montage suivant la revendication 1, **caractérisé en ce qu'**il comprend une source d'eau en combinaison d'un régulateur de pression et d'une électrovanne pilotée par une tempo pour remplir de dispositif (10) d'un volume d'eau prédéfini.

4. Appareil de montage suivant la revendication 3, **caractérisé en ce que** le système de remplissage est combiné à un mélangeur de produit conservateur.

5. Appareil de montage suivant la revendication 1, **caractérisé en ce que** le moyen de guidage (21) est de forme généralement conique de sorte que les doigts de drapage (15) guidés par le moyen de guidage (21) pendant le déplacement simultané de la semelle d'appui (20) et du moyen de guidage (21) permettent la formation du dispositif généralement conique.

6. Appareil de montage suivant la revendication 1, **caractérisé en ce que** le moyen de mise en action (30) est un levier (30) d'activation manuel connecté à 1a semelle d'appui (20) pour mouvoir celle-ci suivant l'axe vertical.

7. Méthode de fabrication d'un dispositif pour la présentation de bouquets individuels de fleurs, ce dispositif comprenant un élément de base (2) muni ou non d'un rebord surélevé le long de toute sa circonférence, et une feuille (5) étanche ou non placée sous l'élément de base (2), convergeant vers le sommet central du dispositif (10) et retenue par une fixation (9) formée par un ruban (7) pour maintenir la feuille étanche (5) autour du bouquet, **caractérisé en ce que** la méthode comprend les étapes de:

   positionner la feuille (5)et l'élément de base (2) sur une semelle d'appui (20) pour supporter le dispositif,
   mouvoir la semelle d'appui (20) vers le bas suivant un axe vertical et un moyen de guidage (21) de forme prédéterminée relié à la semelle d'appui (20) pour procéder à la pliée de la feuille (5),
   guider une pluralité de doigts (15) de drapage mobiles pivotants associés à un câble de serrage (16) pour draper la feuille (5) autour de l'élément de base (2) de manière de reserrer le câble de serrage (16) autour de la feuille (5) drapée, et
   retenir la feuille (5) autour de bouquet par la fixation (9) formée par le ruban (7).

8. Méthode de fabrication suivant la revendication 7, **caractérisée en ce que** la pliée de la feuille (5) est amorcée par le passage de la feuille (5) et de l'élément de base (2) à travers un orifice (26) d'une table de support (25).

9. Méthode de fabrication suivant la revendication 7, **caractérisée en ce que** la descente de la semelle d'appui (20) et du moyen de guidage (21) est simultanée au pivotement des doigts de drapage (15) par déplacement d'un moyen de mise en action (30) relié à la semelle d'appui (20).

10. Méthode de fabrication suivant la revendication 7, **caractérisée en ce que** l'attachage de la feuille (5) drapée se fait en temps masqué pendant le remplissage d'eau dans le dispositif.

**Claims**

1.  Apparatus for assembling a device (10) for the presentation of individual bouquets of flowers, where this device comprises a base element (2) which may or may not be equipped with a raised ridge (4) all around its circumference, and a sheet (5) which may or may not be watertight, placed under the base element (2), and converging towards the center top of the device (10) and held by a fastener (9) formed by a ribbon (7) for holding the watertight sheet (5) around the bouquet,
    **characterized in that** the apparatus comprises:

    several movable pivoting draping fingers (15) associated with a tightening cord (16) for guiding the sheet (5) around the base element (2),
    a movable support base (20) that follows a vertical axis in order to support the device (10),
    a means for guiding (21) of predetermined shape connected to the support base (20) for guiding all the draping fingers (15), and
    a means of activating (30) for shifting the support base (20) and the guide means (21) so that they tighten the tightening cord (16) around the draped sheet (5).

2.  Mounting device according to claim 1, **characterized in that** it comprises a table (25) equipped with an orifice (26) for passage of the sheet (5) and base element (2) and priming the fold through the orifice (26) in the table (25).

3.  Assembly apparatus according to claim 1, **characterized in that** it comprises a source of water in combination with a pressure regulator and a solenoid valve controlled by an interval timer in order to fill the device (10) with a predefined volume of water.

4.  Assembly apparatus according to claim 3, **characterized in that** the filling system is combined with a mixer for preserving product.

5.  Assembly apparatus according to claim 1, **characterized in that** the guide means (21) is of a generally conical shape such that the draping fingers (15) guided by the guide means (21) during the simultaneous shifting of the support base (2) and the guide means (21) allow shaping of the generally conical device.

6.  Assembly apparatus according to claim 1, **characterized in that** the means of activating (30) is a manual activation lever (30) connected to the support base (20) in order to move the latter along the vertical axis.

7.  Means of manufacturing a device for the presentation of individual bouquets of flowers, where this device comprises a base element (2) which may or may not feature a raised ridge all around its circumference, and a sheet (5) which may or may not be watertight placed under the base element (2), and which converges towards the center top of the device (10) and held by a fastener (9) formed by a ribbon (7) for holding the watertight sheet (5) around the bouquet,
    **characterized in that** the method comprises the steps of :

    positioning the sheet (5) and the base element (2) onto the support base (20) to support the device,
    moving the support base (20) towards the bottom along a vertical axis and a guide means (21) of predetermined shape connected to the support base (20) in order to proceed with folding the sheet (5),
    guiding multiple movable pivoting draping fingers associated with a tightening cord (16) for draping the sheet (5) around the base element (2) so as to tighten the cord (16) around the draped sheet (5), and
    holding the sheet (5) around the bouquet by the fastener (9) formed by the ribbon (7).

8.  Method of manufacture according to claim 7, **characterized in that** the fold in the sheet (5) is primed by passing the sheet (5) and the base element (2) through an orifice (26) in a support table (25).

9.  Method of manufacture according to claim 7, **characterized in that** the lowering of the support base (20) and of the guide means (21) is simultaneous with the pivoting of the draping fingers (15) by shifting of a means of activating (30) connected to the support base (20).

10. Method of manufacture according to claim 7, **characterized in that** the attaching of the draping sheet (5) is done in concurrent operation time as the device is being filled with water.

**Patentansprüche**

1. Gerät zur Montage einer Vorrichtung (10) zur Präsentation von einzelnen Blumensträußen, wobei diese Vorrichtung ein Basiselement (2), das mit einem überhöhten Rand (4) entlang seines gesamten Umfangs versehen ist oder nicht, und eine dichte oder nicht dichte Folie (5) umfasst, die unter dem Basiselement (2) angeordnet ist und zur mittleren Spitze der Vorrichtung (10) hin zusammenläuft und durch eine Befestigung (9), die von einem Band (7) gebildet ist, gehalten wird, um die dichte Folie (5) um den Blumenstrauß zu belassen,
**dadurch gekennzeichnet, dass** das Gerät umfasst:

   eine Vielzahl von beweglichen Fingern (15) zum Raffen, die mit einem Seil (16) zum Festziehen verbunden sind, um die Folie (5) um das Basiselement (2) zu führen,
   eine Stützsohle (20), die entlang einer vertikalen Achse beweglich ist, um die Vorrichtung (10) zu stützen,
   ein Führungsmittel (21) von vorbestimmter Form, das mit der Stützsohle (20) verbunden ist, um die Vielzahl von Fingern (15) zum Raffen zu führen, und
   ein Betätigungsmittel (30), um die Stützsohle (20) und das Führungsmittel (21) entlang der Vertikalachse zu verschieben und die Vielzahl von Fingern (15) zum Raffen zu schwenken, wobei sie von dem Führungsmittel (21) derart geführt werden, dass sie das Seil (16) zum Festziehen um die geraffte Folie (5) festziehen.

2. Montagegerät nach Anspruch 1, **dadurch gekennzeichnet, dass** es einen Tisch (25) umfasst, der mit einer Öffnung (26) für den Durchgang der Folie (5) und des Basiselements (2) und den Beginn des Faltens durch die Öffnung (26) des Tisches (25) versehen ist.

3. Montagegerät nach Anspruch 1, **dadurch gekennzeichnet, dass** es eine Wasserquelle in Kombination mit einem Druckregler und einem Magnetventil, das von einem Tempo gesteuert wird, um die Vorrichtung (10) mit einem vordefinierten Wasservolumen zu befüllen.

4. Montagegerät nach Anspruch 3, **dadurch gekennzeichnet, dass** das Befüllungssystem mit einem Mischer eines Konservierungsproduktes kombiniert ist.

5. Montagegerät nach Anspruch 1, **dadurch gekennzeichnet, dass** das Führungsmittel (21) eine im Allgemeinen konische Form hat, so dass die Finger (15) zum Raffen, die vom Führungsmittel (21) während der gleichzeitigen Verschiebung der Stützsohle (20) und des Führungsmittels (21) geführt werden, die Bildung der im Allgemeinen konischen Vorrichtung ermöglichen.

6. Montagegerät nach Anspruch 1, **dadurch gekennzeichnet, dass** das Betätigungsmittel (30) ein manueller Betätigungshebel (30) ist, der an die Stützsohle (20) angeschlossen ist, um diese entlang der Vertikalachse zu bewegen.

7. Methode zur Herstellung einer Vorrichtung zur Präsentation von einzelnen Blumensträußen, wobei diese Vorrichtung ein Basiselement (2), das mit einem überhöhten Rand entlang seines gesamten Umfangs versehen ist oder nicht, und eine dichte oder nicht dichte Folie (5) umfasst, die unter dem Basiselement (2) angeordnet ist und zur mittleren Spitze der Vorrichtung (10) hin zusammenläuft und durch eine Befestigung (9), die von einem,Band (7) gebildet ist, gehalten wird, um die dichte Folie (5) um den Blumenstrauß zu belassen,
**dadurch gekennzeichnet, dass** die Methode die folgenden Schritte umfasst:

   Positionieren der Folie (5) und des Basiselements (2) auf einer Stützsohle (20), um die Vorrichtung zu tragen,
   Bewegen der Stützsohle (20) nach unten entlang einer Vertikalachse und eines Führungselements (21) von vorbestimmter Form, das mit der Stützsohle (20) verbunden ist, um das Falten der Folie (5) vorzunehmen,
   Führen einer Vielzahl von beweglichen schwenkbaren Fingern (15) zum Raffen, die mit einem Seil (16) zum Festziehen verbunden sind, um die Folie (5) um das Basiselement (2) zu raffen, um das Seil (16) zum die geraffte Folie (5) festzuziehen, und
   Halten der Folie (5) um den Blumenstrauß durch die von dem Band (7) gebildete Befestigung (9).

8. Herstellungsmethode nach Anspruch 7, **dadurch gekennzeichnet, dass** das Falten der Folie (5) durch den Durchgang der Folie (5) und des Basiselements (2) durch eine Öffnung (26) eines Auflagetisches (25) eingeleitet wird.

9. Herstellungsmethode nach Anspruch 7, **dadurch gekennzeichnet, dass** das Absenken der Stützsohle (20) und des Führungsmittel (21) gleichzeitig mit dem Schwenken der Finger (15) zum Raffen durch Verschieben eines Betätigungsmittels (30), das mit der Stützsohle (20) verbunden ist, erfolgt.

**10.** Herstellungsmethode nach Anspruch 7, **dadurch gekennzeichnet, dass** das Anbringen der gerafften Folie (5) unauffällig während des Füllens von Wasser in die Vorrichtung erfolgt.

**Fig. 1**

**Fig. 2**

**Fig. 3**

**Fig. 4**

**Fig. 5**

Fig. 6

Fig. 7

**Fig. 8**

Fig. 9

**Fig. 10**

Fig. 11

Fig. 12

Fig. 13

Fig. 14

Fig. 15

Fig. 16

**Fig. 18**

EP 1 560 481 B1

**Fig. 17**

EVACUATION BOUQUET
POSE FEUILLE

VIDE

Ø20

0,25KW_ TRIPHASÉ

EP 1 560 481 B1

**Fig. 19**